# EUROPÄISCHE PATENTSCHRIFT

(11) **EP 2 668 869 B1**
(45) Veröffentlichungstag und Bekanntmachung des Hinweises auf die Patenterteilung: **07.11.2018**
(21) Anmeldenummer: 13170112.0
(22) Anmeldetag: 31.05.2013
(51) Int. Cl.: A47C 1/03, B60N 2/08, B60N 2/75, F16C 29/10

(54) **Lösbares Verriegelungselement**
Releasable locking element
Elément de verrouillage amovible

(30) Priorität: 01.06.2012 DE 102012104798
(43) Veröffentlichungstag der Anmeldung: 04.12.2013
(73) Patentinhaber: Accuride International GmbH, 65582 Diez/Lahn (DE)
(72) Erfinder: Neidhöfer, Patrick, 56377 Seelbach (DE); Quirein, Thomas, 65582 Diez (DE)
(74) Vertreter: WSL Patentanwälte Partnerschaft mbB

(56) Entgegenhaltungen:
- DE-A1- 3 423 504
- DE-A1-102008 023 246
- US-A- 5 961 193
- US-A1- 2003 178 921

## Beschreibung

Die Erfindung betrifft eine Vorrichtung zum lösbaren Verrasten zweier gegeneinander verfahrbar gelagerter Schienenelemente einer Teleskopschiene oder einer Linearführung und zur Einstellung der für das Verfahren aufzubringenden Bewegungskraft.

Eine Teleskopschiene im Sinne der vorliegenden Anmeldung umfasst zwei oder mehr gegeneinander verfahrbar gelagerte Schienenelemente, wobei die Teleskopschiene im ausgefahrenen Zustand eine Länge hat, die wesentlich über diejenige des längsten Schienenelementes hinausgeht. Bei einem sogenannten Teilauszug läßt sich die Teleskopschiene auf eine Länge ausziehen, die geringer ist als die doppelte Länge des längsten Schienenelementes. Bei einem Vollauszug läßt sich die Teleskopschiene auf eine Länge ausziehen, die größer ist als die doppelte Länge des längsten Schienenelementes. Zur Realisierung eines Vollauszuges werden wenigstens drei gegeneinander verfahrbare Schienenelemente benötigt. Bei einer Linearführung wird ein kurzes Schienenelement, das auch als Schlitten bezeichnet wird, entlang der Länge eines wesentlich längeren Schienenelementes geführt. Die Lagerung der Schienenelemente gegeneinander kann über Gleitlager, Rollen- oder Walzenlager oder über Kugellager erfolgen. Bei anspruchsvolleren Anwendungen werden in der Regel Kugellager eingesetzt, da diese eine hohe Belastbarkeit und gute Verfahreigenschaften besitzen.

Für bestimmte Anwendungen wird von Teleskopschienen und Linearführung verlangt, dass die Linearbewegung in unterschiedlichen Verfahrpositionen der Schienenelemente verrastet werden kann. Der Begriff "verrasten" bedeutet im Zusammenhang mit dieser Anmeldung, dass zwischen den Schienenelementen eine Verriegelung in bestimmten Verfahrpositionen der Schienenelemente stattfindet, die erst wieder freigegeben werden muss, damit die Schienenelemente weiter gegeneinander verfahren werden können.

Des weiteren wird für Teleskopschienen und Linearführungen häufig gefordert, dass die für das Verfahren aufzubringende Bewegungskraft einstellbar ist. Für viele Anwendungen soll eine Teleskopschiene oder Linearführung weder zu leicht noch zu schwer zu bewegen sein. Eine zu leichte Bewegbarkeit kann ein unbeabsichtigtes Verfahren zur Folge haben und den Eindruck vermitteln, die Vorrichtung sei insgesamt wenig stabil. Durch eine Erhöhung der für das Verfahren aufzubringenden Bewegungskraft lassen sich häufig Funktion und Haptik der Teleskopschiene oder Linearführung verbessern.

Die Verrastbarkeit der Linearbewegung in unterschiedlichen Positionen und die Einstellbarkeit der Bewegungskräfte sollen häufig gleichzeitig in einer Teleskopschiene oder Linearführung realisiert werden. Bisher sind hierfür zwei unabhängige Systeme erforderlich. Diese bestehen aus vielen Einzelteilen und müssen separat montiert werden. Zumeist sind diese Systeme nur für einen bestimmten Typ von Teleskopschienen oder Linearführungen ausgelegt und verwendbar. Nachteile der für die beiden gewünschten Funktionen bisher separaten Systeme sind, dass sie aus vielen Einzelteilen bestehen und damit aufwendig herzustellen und zu montieren und daher auch störanfällig sind. Darüber hinaus erfordern sie einen relativ großen Bauraum.

DE102008023246A1 betrifft eine Vorrichtung zum lösbaren Verrasten zweier gegeneinander verfahrbar gelagerter Schienenelemente einer Teleskopschiene oder einer Linearführung und zur Einstellung der für das Verfahren aufzubringenden Bewegungskraft mit einem Gehäuse, welches an einem ersten der gegeneinander gelagerten Schienenelemente befestigt ist, wenigstens einem Rastelement und wenigstens einer Rastkraftfeder, welche sich an dem Gehäuse abstützt und das Rastelement gegen das zweite der gegeneinander verfahrbar gelagerten Schienenelemente vorspannt, wenigstens einem Reibelement und wenigstens einer Reibkraftfeder, welche sich an dem Gehäuse abstützt und das Reibelement gegen das zweite der gegeneinander verfahrbar gelagerten Schienenelemente vorgespannt andrückt.

Die Aufgabe der vorliegenden Erfindung bestand daher darin, eine Vorrichtung zum lösbaren Verrasten zweier gegeneinander verfahrbar gelagerter Schienenelemente, einer Teleskopschiene oder einer Linearführung und zur Einstellung der für das Verfahren aufzubringenden Bewegungskraft bereitzustellen, die gegenüber dem Stand der Technik verbessert ist und insbesondere beide Funktionen in einem Bauteil bereitstellt, wenig Platz erfordert, in unterschiedlichen Schienensystemen eingesetzt werden kann, einfach und preiswert herzustellen und zu montieren ist und die Festlegung der Kräfte für das Verrasten und die Bewegung unabhängig voneinander erlaubt.

Gelöst wird diese Aufgabe durch eine Vorrichtung der eingangsgenannten Art mit
einem Gehäuse, welches an einem ersten der gegeneinander verfahrbar gelagerten Schienenelemente befestigbar ist,
wenigstens einem Verriegelungsbolzen und wenigstens einer Rastkraftfeder, welche sich an dem Gehäuse abstützt und den Verriegelungsbolzen in Richtung des zweiten der gegeneinander verfahrbar gelagerten Schienenelemente vorspannen kann,
wenigstens einem Reibelement und wenigstens einer Reibkraftfeder, welche sich an dem Gehäuse abstützt und das Reibelement gegen das zweite der gegeneinander verfahrbar gelagerten Schienenelemente vorgespannt andrücken kann, versehen ist, wobei das Gehäuse eine Gehäusewand und eine Gehäuseabdeckung aufweist, an der sich die wenigstens eine Rastkraftfeder und die wenigstens eine Reibkraftfeder abstützen, wobei die wenigstens eine Rastkraftfeder (4) und die wenigstens eine Reibkraftfeder (6) als Spiralfedern mit unterschiedlichen Durchmessern ausgebildet und in Richtung ihrer Federkraft koaxial zueinander angeordnet sind und wobei an dem Verriegelungsbolzen eine Zugvorrichtung vorgesehen ist, welche es erlaubt, den Verriegelungsbolzen von außerhalb des Gehäuses der Vorrichtung anzuheben, ihn aus einer Ausnehmung oder Bohrung in dem zweiten der gegeneinander verfahrbar gelagerten Schienenelemente herauszuführen und die Verrastung zu lösen.

Das Gehäuse der erfindungsgemäßen Vorrichtung besteht zweckmäßigerweise aus Metall oder Kunststoff, wobei das Gehäuse vorzugsweise aus Kunststoff besteht, da es so einfach und preiswert im Spritzgießverfahren oder einem anderen Formgebungsverfahren für Kunststoffteile hergestellt werden kann. Das Gehäuse kann auf verschiedene Weisen an dem ersten der gegeneinander verfahrbar gelagerten Schienenelemente befestigt sein, beispielsweise durch Anschrauben oder mittels eines Clip- oder Rastmechanismus. Zur Befestigung des Gehäuses der erfindungsgemäßen Vorrichtung weist das Schienenelement zweckmäßigerweise eine durch das Schienenelement hindurchtretende Öffnung auf, in die das Gehäuse eingesetzt und befestigt wird. Das Vorsehen einer Durchgangsöffnung an dem ersten Schienenelement für die Befestigung des Gehäuses ist zweckmäßig, da die Vorrichtung bis zu dem gegenüberliegenden zweiten Schienenelement hindurchgreifen muss, wo das Reibelement und der Verriegelungsbolzen mit dem zweiten der gegeneinander verfahrbar gelagerten Schienenelemente in Berührung bzw. in Eingriff kommen. Denkbar wäre auch, dass das Gehäuse der erfindungsgemäßen Vorrichtung an der Innenseite des ersten Schienenelementes, welche dem zweiten Schienenelement zugewandt ist, befestigt ist. Allerdings würde dies einen relativ großen Zwischenraum zwischen den gegeneinander verfahrbaren Schienenelementen erfordern, um darin das Gehäuse, die beiden Federelemente sowie den Verriegelungsbolzen und das Reibelement unterzubringen. In der bevorzugten Variante greift daher die erfindungsgemäße Vorrichtung durch eine Öffnung in dem ersten der beiden gegeneinander verfahrbar gelagerten Schienenelemente hindurch.
Die erfindungsgemäße Vorrichtung umfasst wenigstens zwei Federelemente, nämlich wenigstens eine Rastkraftfeder, die den Verriegelungsbolzen gegen das zweite der gegeneinander verfahrbar gelagerten Schienenelemente vorspannt, und eine Reibkraftfeder, die das Reibelement gegen das zweite der gegeneinander verfahrbar gelagerten Schienenelemente vorgespannt andrückt.
Der Verriegelungsbolzen ist so ausgestaltet, dass er für das Verrasten der zwei gegeneinander verfahrbar gelagerten Schienenelemente mit Ausnehmungen oder Bohrungen an dem zweiten Schienenelement formschlüssig in Eingriff treten kann, wenn er beim Verfahren der Schienenelemente über einer der Ausnehmungen oder Bohrungen zu liegen kommt.

Der Verriegelungsbolzen soll in die Ausnehmung oder Bohrung eindringen und formschlüssig mit dieser in Eingriff treten, so dass die Schienenelemente gegen ein weiteres Verfahren verriegelt sind. Ein weiteres Verfahren der Schienenelemente wird dadurch ermöglicht, dass der Verriegelungsbolzen entgegen der Federkraft der Rastfeder bewegt und damit wieder außer Eingriff mit der Ausnehmung oder Bohrung gebracht wird, so dass die Verfahrbewegung fortgesetzt werden kann. In einer Ausführungsform der Erfindung ist der wenigstens eine Verriegelungsbolzen wenigstens an seinem in Richtung des zweiten der gegeneinander verfahrbar gelagerten Schienenelemente weisenden Endabschnitt für einen formschlüssigen Eingriff mit Ausnehmungen oder Bohrungen in dem zweiten der gegeneinander verfahrbar gelagerten Schienenelemente ausgebildet. Wenn der Verriegelungsbolzen beim linearen Verfahren der Schienenelemente über eine Ausnehmung oder Bohrung in dem zweiten der gegeneinander verfahrbar gelagerten Schienenelemente geführt wird, tritt er unter der Vorspannung der Rastkraftfeder in die Ausnehmung oder Bohrung ein, und die Verfahrbewegung wird verrastet.

In einer weiteren bevorzugten Ausführungsform der Erfindung ist der wenigstens eine Verriegelungsbolzen wenigstens an seinem in Richtung des zweiten der gegeneinander verfahrbar gelagerten Schienenelemente weisenden Endabschnitt im Wesentlichen zylindrisch ausgebildet.

Um den Verriegelungsbolzen mit der Ausnehmung oder Bohrung wieder außer Eingriff zu bringen, um die Verrastung zu lösen und die lineare Bewegung der Schienenelemente fortzusetzen, muss der Verriegelungsbolzen entgegen der Kraft der Rastkraftfeder bewegt und aus der Ausnehmung oder Bohrung herausgeführt werden. Hierfür ist erfindungsgemäß an dem Verriegelungsbolzen eine Zugvorrichtung vorgesehen, welche es erlaubt, den Verriegelungsbolzen von außerhalb des Gehäuses der Vorrichtung anzuheben. Die Zugvorrichtung kann ein verlängerter Abschnitt des Verriegelungsbolzens selbst, der manuell oder mittels einer Mechanik angehoben wird, oder auch eine an dem Verriegelungsbolzen befestigte Zugstange oder ein Bowdenzug sein.

In einer Ausführungsform der Erfindung ist auf der Oberseite eines der verfahrbaren Schienenelementes oder an dem Gehäuse des Verriegelungselementes selbst ein Entriegelungshebel mit einer dafür vorgesehenen Auslage montiert, der mit dem Verriegelungsbolzen in Eingriff ist und so angelenkt ist, dass der Verriegelungsbolzen durch Betätigen des Hebels, d. h. Drehen um die Anlenkachse des Hebels, entgegen der Kraft der Rastkraftfeder angehoben und aus der Ausnehmung oder Bohrung herausgeführt wird.

Die Rastkraftfeder und die Reibkraftfeder sind voneinander unabhängige Federelemente, die sich beide an dem Gehäuse der erfindungsgemäßen Vorrichtung abstützen. In einer Ausführungsform der Erfindung weist das Gehäuse eine vorzugsweise zylinderförmige Gehäusewand und auf der dem zweiten Schienenelement abgewandten Seite eine Gehäuseabdeckung auf, an der sich die wenigstens eine Rastkraftfeder und die wenigstens eine Reibkraftfeder abstützen. Diese Gehäuseabdeckung kann fest und gegebenenfalls einstückig mit der zylinderförmigen Gehäusewand verbunden sein, so dass das Gehäuse im wesentlichen becherförmig ausgestaltet ist. Alternativ ist die Gehäuseabdeckung als ein separates Teil ausgebildet, das an der zylinderförmigen Gehäusewand, z. B. durch Aufschrauben oder Anclipsen, lösbar befestigt werden kann, um das Gehäuse auf der Seite der Gehäuseabdeckung erforderlichenfalls öffnen zu können.

Zweckmäßigerweise weist die Gehäuseabdeckung eine zentral angeordnete Durchgangsöffnung auf, durch welche sich ein Abschnitt des Verriegelungsbolzens erstreckt oder durch welche sich eine im Inneren des Gehäuses mit dem Verriegelungsbolzen verbundene Zugvorrichtung erstreckt, welche für ein Bewegen des Verriegelungsbolzens entgegen der Vorspannung des Verriegelungsbolzens durch die wenigstens eine Rastkraftfeder ausgelegt ist, wobei die Zugvorrichtung vorzugsweise eine Zugstange oder ein Bowdenzug ist. Für das Anheben bzw. Bewegen des Verriegelungsbolzens über die Zugvorrichtung kann mit Vorteil an dem Gehäuse der Vorrichtung oder an dem ersten Schienenelement ein entsprechender Zug- oder Kipphebelmechanismus vorgesehen sein, dessen Ausgestaltung im Können des Fachmanns liegt und daher hier nicht näher erläutert werden muss.

In einer weiteren Ausführungsform der Erfindung sind an dem Gehäuse Mittel zum Verändern der Länge der Rastkraftfeder zwischen dem Abstützpunkt an dem Gehäuse und dem Verriegelungsbolzen vorgesehen. Durch Verändern der Länge der Rastkraftfeder läßt sich deren Rastkraft verstellen, mit der der Verriegelungsbolzen in Richtung des zweiten der gegeneinander verfahrbar gelagerten Schienenelemente vorgespannt wird. Ein Mittel zum Verändern der Länge der Rastkraftfeder kann beispielsweise darin bestehen, dass sich die Position des Abstützpunktes der Rastkraftfeder an dem Gehäuse durch ein Schraubgewinde verändern läßt. Solche Mittel zum Verändern der Länge der Rastkraftfeder an dem Gehäuse haben den Vorteil, dass sich die Rastkraft auch nachträglich noch verändern läßt. Ansonsten ist die Rastkraft durch die verwendete Rastkraftfeder und ihre Anfangskompression vorgegeben.

In einer weiteren Ausführungsform sind an dem Gehäuse auch Mittel zum Verändern der Länge der Reibkraftfeder zwischen dem Abstützpunkt an dem Gehäuse und dem Reibelement für ein Verstellen der Reibkraft der Reibkraftfeder vorgesehen. Die Ausgestaltung kann entsprechend denjenigen der Mittel zum Verändern der Länge der Rastkraftfeder sein. Die erfindungsgemäße Vorrichtung kann die Mittel zum Verändern der Länge der Rastkraftfeder alleine oder die Mittel zum Verändern der Länge der Reibkraftfeder alleine aufweisen. Alternativ kann die erfindungsgemäße Vorrichtung sowohl Mittel zum Verändern der Länge der Rastkraftfeder als auch der Reibkraftfeder aufweisen, wobei die Längen der Federn getrennt und unabhängig voneinander oder gemeinsam verstellbar sein können.

In einer bevorzugten Ausführungsform der vorliegenden Erfindung sind die wenigstens eine Rastkraftfeder und/oder die wenigstens eine Reibkraftfeder als Spiraldruckfedern ausgebildet. Andere Arten von Druckfederelementen können ebenfalls eingesetzt werden und sind vom Umfang der vorliegenden Erfindung nicht ausgenommen. Andere Arten von Federelementen sind beispielsweise Gasdruckfedern oder Öldruckfedern. Allerdings sind Spiraldruckfedern für die Anwendung in der erfindungsgemäßen Vorrichtung bevorzugt, da sie erheblich preiswerter sind und für die Anwendung in der vorliegenden Erfindung bessere Federkennwerte besitzen.

In einer weiteren bevorzugten Ausführungsform der Erfindung sind die wenigstens eine Rastkraftfeder und die wenigstens eine Reibkraftfeder als Spiralfedern mit unterschiedlichen Durchmessern ausgebildet und in Richtung ihrer Federkraft koaxial zueinander angeordnet. Bei dieser Ausführungsform ist vorzugsweise die Rastkraftfeder das Federelement mit dem kleineren Durchmesser und die Reibkraftfeder das Federelement mit dem größeren Durchmesser, so dass sich die Rastkraftfeder koaxial im Inneren der Reibkraftfeder erstreckt.

In einer weiteren Ausführungsform, vorzugsweise einer solchen, bei der die Rastkraftfeder und die Reibkraftfeder koaxial zueinander angeordnet sind, ist das Reibelement ein im wesentlichen becherförmiges oder zylinderförmiges Element mit einer zylinderförmigen Außenwand und auf der dem zweiten Schienenelement zugewandten Seite einem sich vom Rand der zylinderförmigen Außenwand nach innen erstreckenden ringförmigen Boden, wobei sich ein Endabschnitt der Reibkraftfeder innerhalb der zylinderförmigen Außenwand erstreckt und an dem ringförmigen Boden abstützt, um das Reibelement gegen das zweite der gegeneinander verfahrbar gelagerten Schienenelemente vorgespannt anzudrücken. Der ringförmige Boden weist eine Durchgangsöffnung auf, durch welche der Verriegelungsbolzen hindurchtritt.

Wenn der Verriegelungsbolzen, wie oben beschrieben, beispielsweise einen zylindrischen Endabschnitt aufweist, dann ist die Durchgangsöffnung in dem ringförmigen Boden des Reibelementes geeigneterweise eine kreisrunde Öffnung. Vorzugsweise sind an der Durchgangsöffnung und an dem Verriegelungsbolzen Anschläge vorgesehen, welche verhindern, dass der Verriegelungsbolzen vollständig durch die Durchgangsöffnung in Richtung des zweiten Schienenelementes hindurchtreten und aus der Vorrichtung herausfallen kann.

Beim Verfahren der Schienenelemente gegeneinander reibt der Boden des Reibelementes unter der Vorspannung der Reibkraftfeder gegen die Innenseite des zweiten der gegeneinander verfahrbar gelagerten Schienenelemente und hemmt dadurch die Bewegung bzw. erhöht die für das Verfahren aufzubringende Bewegungskraft.

Bezogen auf das Reibelement und die Reibkraftfeder, wird die für das Verfahren aufzubringende Bewegungskraft bzw. der Reibwiderstand zum einen durch die Kraft der Reibkraftfeder und zum anderen durch Form, Größe und Rauheit des an dem zweiten Schienenelement anliegenden Bereichs des Reibelementes bestimmt. Selbstverständlich beeinflussen noch andere Faktoren die für das Verfahren der Schienenelemente aufzubringende Bewegungskraft, wie beispielsweise die Größe der Schienenelemente, die Lagerung zwischen den Schienenelementen und die auf die Schienenelemente aufgebrachte Last. In Bezug auf die erfindungsgemäße Vorrichtung ist zu berücksichtigen, dass beim Verfahren der Schienenelemente auch der unter der Kraft der Rastkraftfeder vorgespannte Verriegelungsbolzen gegen das zweite der Schienenelemente vorgespannt drückt und die aufzubringende Bewegungskraft damit erhöht.

In einer weiteren Ausführungsform weist das zuvor beschriebene Reibelement, welches die zylinderförmige Außenwand und den im wesentlichen ringförmigen Boden besitzt, eine weitere zylinderförmige Wand auf, die sich vom Rand der Durchgangsöffnung in dem ringförmigen Boden koaxial zu der zylinderförmigen Außenwand erstreckt, wobei sich ein Endabschnitt der Reibkraftfeder zwischen der zylinderförmigen Außenwand und der weiteren zylinderförmigen Wand erstreckt und sich ein Endabschnitt der Rastkraftfeder innerhalb der weiteren zylinderförmigen Wand erstreckt. Diese zusätzliche zylinderförmige Wand stabilisiert die Struktur des Reibelementes und die Position der Reibkraftfeder in Anlage mit dem Reibelement. Des weiteren ist diese zusätzliche zylinderförmige Wand geeignet, die sich innerhalb dieser Wand erstreckende Rastkraftfeder und den am Ende der Rastkraftfeder angeordneten Verriegelungsbolzen zu führen und zu verhindern, dass es unter Verlust seiner Funktionsfähigkeit verkippt wird oder verkantet.

In einer weiteren bevorzugten Ausführungsform der erfindungsgemäßen Vorrichtung mit einem Reibelement mit zylinderförmiger Außenwand ist das Reibelement formschlüssig in die im wesentlichen zylinderförmige Gehäusewand eingesetzt, wobei das Reibelement entgegen der Kraft der Reibkraftfeder in das Gehäuse hineingedrückt werden kann, aber gegen ein Herausfallen aus dem Gehäuse vorzugsweise gesichert ist. Die Sicherung des Reibelementes gegen ein Herausfallen aus dem Gehäuse ist bei einer bevorzugten Ausführungsform dadurch sichergestellt, dass an der zylinderförmigen Außenwand des Reibelementes auf der Außenseite eine umlaufende Wulst oder zumindest Abschnitte davon vorgesehen ist/sind und an der zylinderförmigen Gehäusewand diese Wulst von außen umgreifende Haken vorgesehen sind.

Die vorliegende Erfindung umfasst neben der hierin zuvor beschriebenen Vorrichtung auch Teleskopschienen und Linearführungen mit wenigstens zwei gegeneinander verfahrbar gelagerten Schienenelementen und einer Vorrichtung der hierin beschriebenen Art zum lösbaren Verrasten der Schienenelemente und zur Einstellung der für das Verfahren aufzubringenden Bewegungskraft, wobei an dem zweiten der gegeneinander verfahrbar gelagerten Schienenelemente Ausnehmungen oder Bohrungen vorgesehen sind, welche für einen formschlüssigen Eingriff mit dem Verriegelungsbolzen ausgelegt sind.

Qualitativ höherwertige Teleskopschienen und Linearführungen sind in der Regel kugelgelagert, wobei die Kugeln mittels eines Kugelkäfigs zwischen den Schienenelementen in gleichmäßigem Abstand zueinander gehalten und gegen ein unerwünschtes Verschieben und Herausfallen gesichert werden. Die herkömmlichen Teleskopschienen und Linearführungen haben Schienenelemente mit einem im wesentlichen C-förmigen Profil, wobei die Laufbahnen für die Kugeln an den Schenkeln bzw. Endabschnitten der C-förmigen Profile ausgebildet sind. Jedes Schienenelement weist somit zwei einander gegenüberliegende Laufbahnen auf. Der Kugelkäfig erstreckt sich aus Stabilitätsgründen in der Regel zwischen diesen Laufbahnen, so dass ein Kugelkäfig gemeinsam für beide Laufbahnen vorgesehen ist. Der Verbindungsabschnitt des Kugelkäfigs zwischen den beiden Laufbahnen verläuft zwischen den zwei gegeneinander verfahrbaren Schienenelementen. Er käme daher dem Verriegelungsbolzen und dem Reibelement der vorliegenden Erfindung beim Verfahren der Schienenelemente gegeneinander in den Weg. Bei kugelgelagerten erfindungsgemäßen Teleskopschienen und Linearführungen mit Kugelkäfig weist der Kugelkäfig daher zweckmäßigerweise eine sich in Längsrichtung erstreckende Durchtrittsöffnung auf, durch welche wenigstens das Reibelement und der Verriegelungsbolzen zu dem zweiten der gegeneinander verfahrbar gelagerten Schienenelemente hindurchtreten.

Die erfindungsgemäße Teleskopschiene oder Linearführung ist zweckmäßigerweise so ausgestaltet, dass das Reibelement durch die Kraft der Reibkraftfeder federnd vorgespannt an dem zweiten der gegeneinander verfahrbar gelagerten Schienenelemente anliegt.

Die erfindungsgemäße Vorrichtung hat den Vorteil, dass sie die zwei Funktionen des lösbaren Verrastens zweier gegeneinander verfahrbar gelagerter Schienenelemente und die Einstellung der für das Verfahren aufzubringenden Bewegungskraft in einem Bauteil vereint. Dennoch können Rastkraft und Bewegungskraft unabhängig voneinander festgelegt werden, nämlich über die jeweiligen verwendeten Federelemente sowie das Reibelemente und den Verriegelungsbolzen. Gegenüber den bekannten Systemen benötigt die erfindungsgemäße Vorrichtung nur wenig Platz und kann in sehr vielen verschiedenen Typen von Teleskopschienen und Linearführungen ohne Änderungen eingesetzt werden. Durch die Einfachheit der Bauteile und die einfache Montage ist es preiswert herzustellen und einzubauen. Da das System dauerhaft unter Spannung steht, kann das Spiel zwischen den Bauteilen ausgeglichen werden, so dass dennoch höhere Toleranzen möglich sind. Auch Veränderungen der Bauteile durch Temperaturschwankungen werden durch die Vorspannung in dem System ausgeglichen.

Weitere Vorteile, Merkmale und Ausgestaltungsmöglichkeiten werden anhand des nachfolgenden Beispiels und der dazugehörigen Figuren erläutert.
- Figur 1: zeigt eine erfindungsgemäße Vorrichtung zum lösbaren Verrasten zweier gegeneinander verfahrbarer Schienenelemente einer Teleskopschiene oder einer Linearführung und zur Einstellung der für das Verfahren aufzubringenden Bewegungskraft im Querschnitt.
- Figur 2: zeigt eine perspektivische Ansicht der Querschnittsdarstellung gemäß Figur 1.
- Figur 3: zeigt eine Teleskopschiene mit eingebauter erfindungsgemäßer Vorrichtung gemäß Figur 1 von unten mit Blick auf das zweite der gegeneinander verfahrbaren Schienenelemente, welches die Ausnehmungen oder Bohrungen für das Verrasten mit dem Verriegelungsbolzen aufweist.
- Figur 4: zeigt die Teleskopschiene gemäß Figur 3 in aufgebrochener perspektivischer Darstellung.
- Figur 5: zeigt die Teleskopschiene gemäß Figur 3 im Längsschnitt.
- Figur 6: zeigt eine Ausführungsform einer Teleskopschiene mit eingebauter erfindungsgemäßer Vorrichtung mit einer Hebeleinrichtung zum Entriegeln des Verriegelungsbolzens im Längsschnitt.
- Figur 7: zeigt die Teleskopschiene gemäß Figur 6 von der Seite.
- Figur 8: zeigt die Teleskopschiene gemäß Figur 6 in aufgebrochener perspektivischer Darstellung.

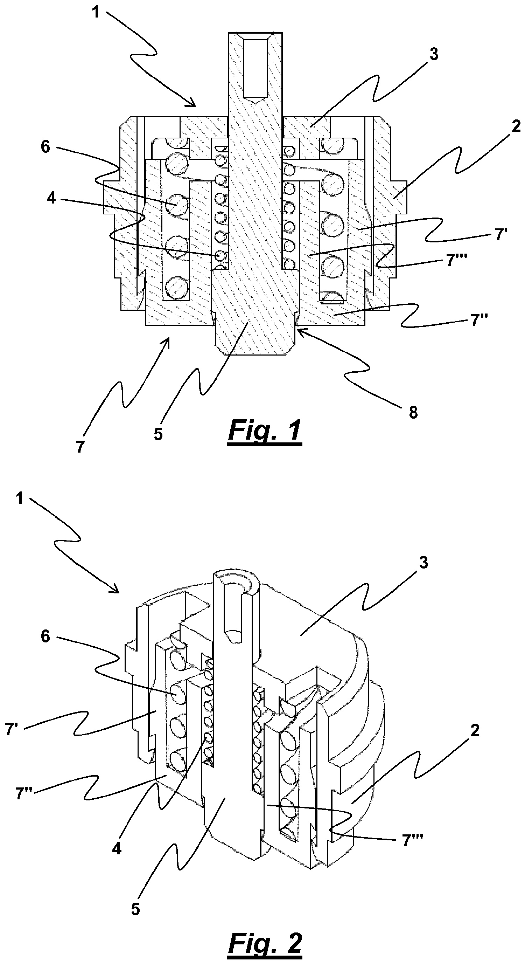

Die Figuren 1 und 2 zeigen eine erfindungsgemäße Vorrichtung zum lösbaren Verrasten zweier gegeneinander verfahrbar gelagerter Schienenelemente einer Teleskopschiene oder einer Linearführung und zur Einstellung der für das Verfahren aufzubringenden Bewegungskraft im Querschnitt auf die Schnittfläche (Figur 1) und im Querschnitt in perspektivischer Ansicht (Figur 2). Die Vorrichtung umfasst ein Gehäuse 1 mit einer im wesentlichen zylinderförmigen Gehäusewand 2 und einer Gehäuseabdeckung 3. Die Teile des Gehäuses sind im Spritzgießverfahren aus Kunststoff hergestellt.

Die Vorrichtung umfasst weiterhin eine Rastkraftfeder 4 und eine Reibkraftfeder 6, die beide aus Metall als Spiraldruckfedern mit unterschiedlichem Durchmesser hergestellt sind. Die Rastkraftfeder 4 mit dem kleineren Durchmesser erstreckt sich koaxial innerhalb der Reibkraftfeder 6 mit dem größeren Durchmesser. Beide Federn 4 und 6 sind nach oben an der Gehäuseabdeckung abgestützt. Bei dieser Ausführungsvariante sind Mittel zur nachträglichen Veränderung der Abstützposition der Federn für eine Feineinstellung der Federkräfte nicht vorgesehen, lassen sich aber in der beschriebenen Art und Weise realisieren. Beispielsweise könnte die Gehäuseabdeckung 3 mit einem Schraubgewinde in die Gehäuseaußenwand 2 hinein- und/oder herausschraubbar sein, um die Federlängen nachträglich in begrenztem Umfang einstellen zu können.

An dem der Gehäuseabdeckung 3 gegenüberliegenden Ende der Federn ist ein Reibelement 7 vorgesehen, welches von der Reibkraftfeder 6 in den Figuren 1 und 2 nach unten vorgespannt gehalten wird. Das Reibelement 7 besteht aus einer zylinderförmigen Außenwand 7' und einem ringförmigen Boden 7", der sich vom unteren Rand der zylinderförmigen Außenwand 7' zur Mitte hin erstreckt. In dem ringförmigen Boden 7" ist eine Durchgangsöffnung 8 vorgesehen, durch welche der Verriegelungsbolzen 5 hindurchtritt. In der Gehäuseabdeckung 3 is ebenfalls eine Durchgangsöffnung vorgesehen, durch welche der entgegengesetzte Endabschnitt des Verriegelungsbolzens 5 hindurchtritt. An diesem entgegengesetzten Endabschnitt kann der Verriegelungsbolzen 5 entgegen der Vorspannung der Rastkraftfeder 4 angehoben und so außer Eingriff mit einer Ausnehmung oder Bohrung in dem zweiten der gegeneinander verfahrbaren Schienenelemente gebracht werden.

Vom inneren Rand des ringförmigen Bodens 7" bzw. von der Durchgangsöffnung 8 erstreckt sich nach oben eine weitere zylinderförmige Wand 7"', in deren Innenraum sich die Rastkraftfeder 4 und der Verriegelungsbolzen 5 erstrecken. Diese weitere zylinderförmige Wand 7'" ist geeignet, den Verriegelungsbolzen 5 zu führen.

Das Reibelement 7 weist an der zylinderförmigen Außenwand 7' eine umlaufende Wulst bzw. eine Verbreiterung auf, die von Rasthaken an der Gehäuseaußenwand 2 umgriffen wird, so dass das Reibelement 7 in der zylinderförmigen Gehäuseaußenwand 2 gehalten und in das Gehäuse entgegen der Federvorspannungen hineingedrückt werden kann, aus dem Gehäuse aber nicht herausfällt.

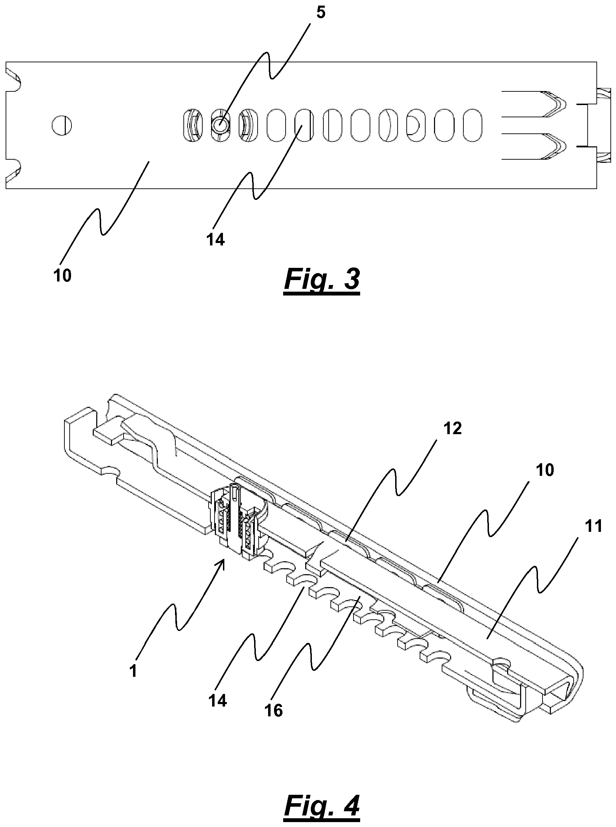

Die Figuren 3 bis 5 zeigen eine erfindungsgemäße Teleskopschiene mit einer Aussenschiene 10 und einer Innenschiene 11, die beide ein im wesentlichen C-förmiges Profil aufweisen, wobei die Laufbahnen für die Kugellagerung jeweils an den Schenkeln bzw. Endabschnitten des C-förmigen Profils angeordnet sind. Das zwischen den Schienenelementen 10 und 11 vorgesehene Kugellager ist in den Figuren 3 bis 5 nicht dargestellt.

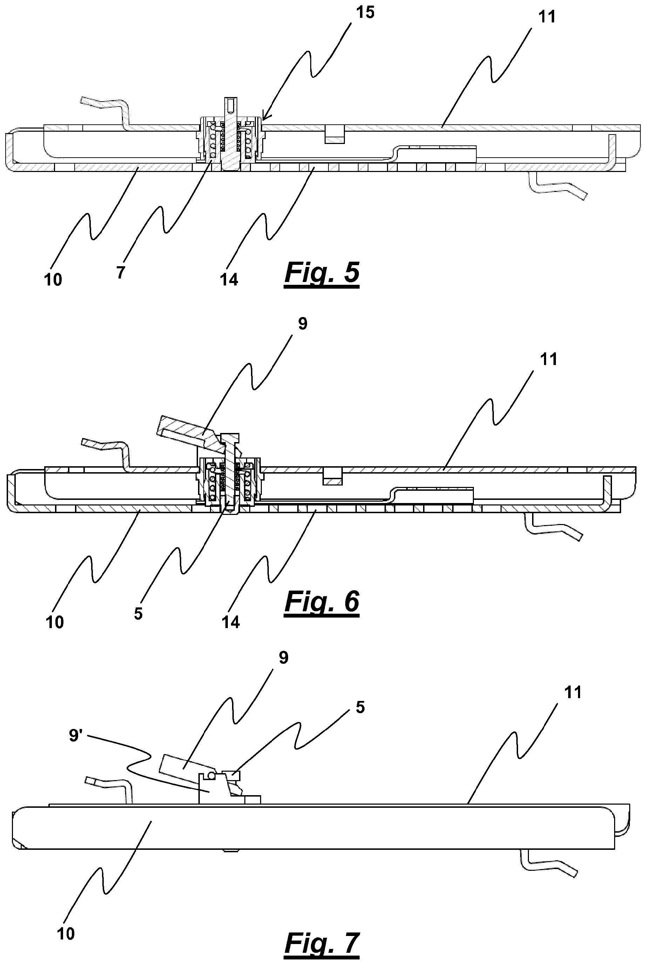

Die Innenschiene 11 weist eine Aufnahmeöffnung 15 auf, in welche die erfindungsgemäße Vorrichtung gemäß den Figuren 1 und 2 eingesetzt ist. Figur 3 zeigt die Teleskopschiene von unten mit Blick auf die Außenschiene 10, welches die Ausnehmungen oder Bohrungen 14 für das Verrasten mit dem Verriegelungsbolzen aufweist. Figur 4 zeigt die Teleskopschiene in aufgebrochener perspektivischer Darstellung, und Figur 5 zeigt die Teleskopschiene im Längsschnitt. In den Figuren 4 und 5 ist gut zu erkennen, dass das Reibelement 7 mit der Fläche des ringförmigen Bodens 7" auf der Innenseite der Aussenschiene 10 unter Vorspannung anliegt und dort eine Reibungskraft ausübt. An der Aussenschiene 10 sind an mehreren Positionen als Durchgangsbohrungen ausgebildete Ausnehmungen 14 vorgesehen. Wie in den Figuren 4 und 5 ebenfalls gut zu erkennen ist, tritt der Verriegelungsbolzen 5 in eine solche Ausnehmung oder Bohrung 14 ein und verrastet die Schienenelemente gegen ein weiteres Verfahren gegeneinander. Zum Lösen der Verrastung der Schienenelemente gegeneinander wird der Verriegelungsbolzen 5 entgegen der Federkraft der Rastfeder 4 angehoben und die Scheienenelemente weiter gegeneinander verfahren.

Der in Figur 4 dargestellte Kugelkäfig 12 besteht aus einem Stück, d.h. er weist zwischen den beiden einander gegenüberliegenden Kugellaufbahnen Verbindungsstücke auf, die sich zwischen den Schienenelementen 10 und 11 erstrecken. Damit die an der Innenschiene 11 montierte erfindungsgemäße Vorrichtung mit dem Verriegelungsbolzen 5 und dem Reibelement 7 mit der Innenfläche der Aussenschiene 10 in Berührung treten kann und der Kugelkäfig beim Verfahren der Schienenelemente nicht im Wege steht, weist der Kugelkäfig 12 eine sich in Längsrichtung erstreckende Durchtrittsöffnung 16 auf, die so angeordnet ist, dass die erfindungsgemäße Vorrichtung dazwischen verfahren werden kann.

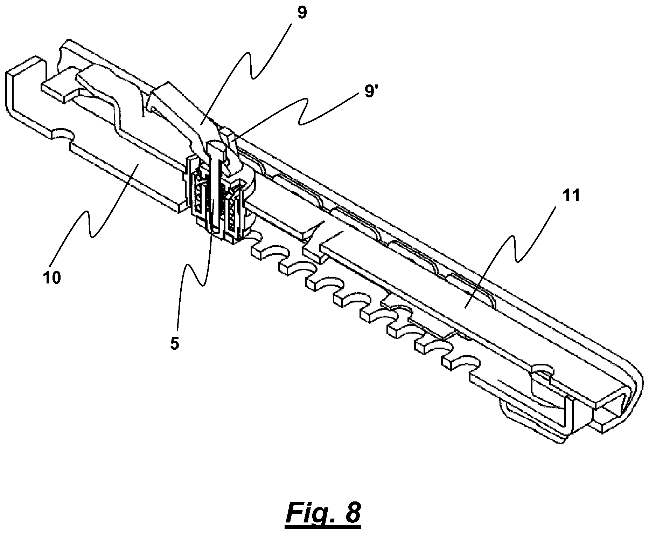

Die Figuren 6, 7 und 8 zeigen eine alternative Ausführungsform einer erfindungsgemäßen Vorrichtung an einer Teleskopschiene, wobei ein Entriegelungshebel 9 zum Entriegeln des Verriegelungsbolzens 5 an der Vorrichtung 1 vorgesehen ist. Um den Verriegelungsbolzen 5 mit der Ausnehmung oder Bohrung 14, mit der er gerade in formschlüssigem Eingriff ist, zum Lösen der Verrastung wieder außer Eingriff zu bringen, wird der Verriegelungsbolzen 5 entgegen der Kraft der Rastkraftfeder 4 angehoben und aus der Ausnehmung oder Bohrung 14 herausgeführt. Hierfür sind in der hier dargestellten Ausführungsform auf der Oberseite der erfindungsgemäßen Vorrichtung 1 eine Auflage 9' und ein Entriegelungshebel 9 montiert, der mit dem Verriegelungsbolzen in Eingriff ist. Der Verriegelungsbolzen 5 weist für diesen Eingriff am oberen Ende eine umlaufende Wulst auf, unter die der Endabschnitt des Entriegelungshebels 9 greift. Der Hebel 9 ist an der Auflage angelenkt. Durch Herabdrücken des Entriegelungshebels 9' an seinem dem Verriegungsbolzen abgewandten Ende wird das dem Verriegungsbolzen zugewandte Ende zusammen mit dem Verriegelungsbolzen angehoben und der Verriegelungsbolzen aus der Ausnehmung oder Bohrung 14 herausgeführt, so dass die Schienenelemente 10 und 11 wieder entriegelt sind und gegeneinander verfahren werden können.

### Bezugszeichenliste

- 1: Gehäuse
- 2: Gehäuseaußenwand
- 3: Gehäuseabdeckung
- 4: Rastkraftfeder
- 5: Verriegelungsbolzen
- 6: Reibkraftfeder
- 7: Reibelement
- 7': Zylinderförmige Außenwand des Reibelements
- 7": Ringförmiger Boden des Reibelements
- 7'": Weitere zylinderförmige Wand des Reibelements
- 8: Durchgangsöffnung im Boden
- 9: Entriegelungshebel
- 9': Auflage für Entriegelungshebel
- 10: Außenschiene
- 11: Innenschiene
- 12: Kugelkäfig
- 14: Ausnehmungen oder Bohrungen an der Außenschiene
- 15: Aufnahmeöffnung an der Innenschiene für Gehäusemontage
- 16: Durchtrittsöffnung im Kugelkäfig

## Patentansprüche

1. Vorrichtung zum lösbaren Verrasten zweier gegeneinander verfahrbar gelagerter Schienenelemente (10, 11) einer Teleskopschiene oder einer Linearführung und zur Einstellung der für das Verfahren aufzubringenden Bewegungskraft mit
einem Gehäuse (1), welches an einem ersten der gegeneinander verfahrbar gelagerten Schienenelemente (11) befestigbar ist,
wenigstens einem Verriegelungsbolzen (5) und wenigstens einer Rastkraftfeder (4), welche sich an dem Gehäuse abstützt und den Verriegelungsbolzen (5) in Richtung des zweiten der gegeneinander verfahrbar gelagerten Schienenelemente (10) vorspannen kann, wenigstens einem Reibelement (7) und wenigstens einer Reibkraftfeder (6), welche sich an dem Gehäuse abstützt und das Reibelement (7) gegen das zweite der gegeneinander verfahrbar gelagerten Schienenelemente (10) vorgespannt andrücken kann, versehen ist, wobei das Gehäuse (1) eine Gehäusewand (2) und eine Gehäuseabdeckung (3) aufweist, an der sich die wenigstens eine Rastkraftfeder (4) und die wenigstens eine Reibkraftfeder (6) abstützen, wobei die wenigstens eine Rastkraftfeder (4) und die wenigstens eine Reibkraftfeder (6) als Spiralfedern mit unterschiedlichen Durchmessern ausgebildet und in Richtung ihrer Federkraft koaxial zueinander angeordnet sind und wobei an dem Verriegelungsbolzen eine Zugvorrichtung vorgesehen ist, welche es erlaubt, den Verriegelungsbolzen von außerhalb des Gehäuses der Vorrichtung anzuheben, ihn aus einer Ausnehmung oder Bohrung in dem zweiten der gegeneinander verfahrbar gelagerten Schienenelemente herauszuführen und die Verrastung zu lösen.

2. Vorrichtung nach Anspruch 1, **dadurch gekennzeichnet, dass** der wenigstens eine Verriegelungsbolzen (5) wenigstens an seinem in Richtung des zweiten der gegeneinander verfahrbar gelagerten Schienenelemente (10) weisenden Endabschnitt (5') für einen formschlüssigen Eingriff mit Ausnehmungen oder Bohrungen in dem zweiten der gegeneinander verfahrbar gelagerten Schienenelemente (10) ausgebildet ist.

3. Vorrichtung nach einem der vorangegangenen Ansprüche, **dadurch gekennzeichnet, dass** der wenigstens eine Verriegelungsbolzen (5) wenigstens an seinem in Richtung des zweiten der gegeneinander verfahrbar gelagerten Schienenelemente (10) weisenden Endabschnitt (5') im Wesentlichen zylindrisch ausgebildet ist.

4. Vorrichtung nach einem der vorangegangenen Ansprüche, **dadurch gekennzeichnet, dass** das Gehäuse (1) eine zylinderförmige Gehäusewand (2) aufweist.

5. Vorrichtung nach Anspruch 4, **dadurch gekennzeichnet**, die Gehäuseabdeckung (3) eine zentral angeordnete Durchgangsöffnung aufweist, durch welche sich ein Abschnitt des Verriegelungsbolzens (5) erstreckt oder durch welche sich die im Inneren des Gehäuses (1) mit dem Verriegelungsbolzen (5) verbundene Zugvorrichtung erstreckt, welche für ein Bewegen des Verriegelungsbolzens (5) entgegen der Vorspannung des Verriegelungsbolzens (5) durch die wenigstens eine Rastkraftfeder (4) ausgelegt ist, wobei die Zugvorrichtung vorzugsweise eine Zugstange oder ein Bowdenzug ist.

6. Vorrichtung nach einem der vorangegangenen Ansprüche, **dadurch gekennzeichnet, dass** die wenigstens eine Rastkraftfeder (4) und/oder die wenigstens eine Reibkraftfeder (6) als Spiraldruckfedern ausgebildet sind.

7. Vorrichtung nach einem der vorangegangenen Ansprüche, **dadurch gekennzeichnet, dass** das Reibelement (7) eine zylinderförmige Außenwand und einen sich vom Rand der zylinderförmigen Außenwand nach innen erstreckenden ringförmigen Boden aufweist, wobei sich ein Endabschnitt der Reibkraftfeder (6) innerhalb der zylinderförmigen Außenwand erstreckt und an dem ringförmigen Boden abstützt, um das Reibelement (7) gegen das zweite der gegeneinander verfahrbar gelagerten Schienenelemente (10) vorgespannt anzudrücken, und der ringförmige Boden weiterhin eine Durchgangsöffnung aufweist, durch welche der Verriegelungsbolzen (5) hindurchtritt.

8. Vorrichtung nach Anspruch 7, **dadurch gekennzeichnet, dass** das Reibelement (7) eine weitere zylinderförmige Wand aufweist, die sich von dem Rand der Durchgangsöffnung in dem ringförmigen Boden koaxial zu der zylinderförmigen Außenwand erstreckt, wobei sich ein Endabschnitt der Reibkraftfeder (6) zwischen der zylinderförmigen Außenwand und der weiteren zylinderförmigen Wand erstreckt und sich ein Endabschnitt der Rastkraftfeder (4) innerhalb der weiteren zylinderförmigen Wand erstreckt.

9. Vorrichtung nach einem der vorangegangenen Ansprüche, **dadurch gekennzeichnet, dass** an dem Gehäuse (1) Mittel zum Verändern der Länge der Rastkraftfeder (4) zwischen dem Abstützpunkt an dem Gehäuse (1) und dem Verriegelungsbolzen (5) für ein Verstellen der Kraft der Rastkraftfeder (4) vorgesehen sind.

10. Vorrichtung nach einem der vorangegangenen Ansprüche, **dadurch gekennzeichnet, dass** an dem Gehäuse (1) Mittel zum Verändern der Länge der Reibkraftfeder (6) zwischen dem Abstützpunkt an dem Gehäuse (1) und dem Reibelement (7) für ein Verstellen der Kraft der Reibkraftfeder (6) vorgesehen sind.

11. Teleskopschiene oder Linearführung mit wenigstens zwei gegeneinander verfahrbar gelagerten Schienenelementen (10, 11) und einer Vorrichtung nach einem der vorangegangenen Ansprüche zum lösbaren Verrasten der Schienenelemente und zur Einstellung der für das Verfahren aufzubringenden Bewegungskraft, wobei an dem zweiten der gegeneinander verfahrbar gelagerten Schienenelemente (10) Ausnehmungen oder Bohrungen (14) vorgesehen sind, welche für einen formschlüssigen Eingriff mit dem Verriegelungsbolzen (5) ausgelegt sind.

12. Teleskopschiene oder Linearführung nach Anspruch 11, **dadurch gekennzeichnet, dass** die wenigstens zwei Schienenelemente (10, 11) über ein Kugellager mit einem Kugelkäfig (12) und Kugeln gegeneinander verfahrbar gelagert sind, wobei der Kugelkäfig eine sich in Längsrichtung erstreckende Durchtrittsöffnung (16) aufweist, durch welche wenigstens das Reibelement (7) und der Verriegelungsbolzen (5) zu dem zweiten der gegeneinander verfahrbar gelagerten Schienenelemente (10) hindurchtreten.

13. Teleskopschiene oder Linearführung nach einem der Ansprüche 11 oder 12, **dadurch gekennzeichnet, dass** das Reibelement (7) durch die Kraft der Reibkraftfeder (6) federnd vorgespannt an dem zweiten der gegeneinander verfahrbar gelagerten Schienenelemente (10) anliegt.

## Claims

1. An apparatus provided for releasably locking two rail elements (10, 11), which are supported displaceably relative to each other, of a telescopic rail or a linear guide and for adjusting the motivity to be applied for the displacement, comprising a housing (1) which is adapted to be fastened to a first one of the rail elements (11) which are supported displaceably relative to each other,
at least one locking element (5) and at least one locking force spring (4) which is supported against the housing and being adapted to bias the locking element (5) against the second of the rail elements (10) which are supported displaceably relative to each other,
at least one friction element (7) and at least one friction force spring (6) which is supported against the housing and which is adapted to press the friction element (7) in biased relationship against the second of the rail elements (10) which are supported displaceably relative to each other,
wherein the housing (1) comprises a housing wall (2) and a housing cover (3), on which the at least one locking force spring (4) and the at least one friction force spring (6) are supported, wherein the at least one locking force spring (4) and the at least one friction force spring (6) are in the form of coil springs of differing diameters and are arranged in coaxial relationship in the direction of their spring force, and wherein a towing device is provided on the locking element, which allows the locking element to be lifted from outside the housing of the device and to remove it from a recess or hole in the second of the rail elements which are supported displaceably relative to each other and to release the locking.

2. The apparatus as set forth in claim 1 **characterised in that** the at least one locking element (5), at least its end portion (5') pointing towards the second of the rail elements (10) which are supported displaceably relative to each other, is adapted for an interlocking engagement with recesses or bores in the second of the rail elements (10) which are supported displaceably relative to each other.

3. The apparatus as set forth in one of the preceding claims **characterised in that** the at least one locking element (5) is substantially cylindrical at least at its end portion (5') pointing towards the second of the rail elements (10) which are supported displaceably relative to each other.

4. The apparatus as set forth in one of the preceding claims **characterised in that** the housing (1) has a cylindrical housing wall (2).

5. The apparatus as set forth in claim 4 **characterised in that** the housing cover (3) comprises a centrally arranged through opening, through which a portion of the locking element (5) extends or through which the towing device, which is connected to the locking element (5) inside the housing (1), extends, which is adapted for a movement of the locking element (5) against the bias of the locking element (5) by means of the at least one locking force spring (4), wherein the towing device is preferably a pull rod or a Bowden cable.

6. The apparatus as set forth in one of the preceding claims **characterised in that** the at least one locking force spring (4) and/or the at least one friction force spring (6) are in the form of coil compression springs.

7. The apparatus as set forth in one of the preceding claims **characterised in that** the friction element (7) has a cylindrical outside wall and an annular bottom which extends inwardly from the edge of the cylindrical outside wall, wherein an end portion of the locking force spring (6) extends inside the cylindrical outside wall and is supported at the annular bottom to press the friction element (7) in biased relationship against the second of the rail elements (10) which are supported displaceably relative to each other, and the annular bottom further has a through opening through which the locking element (5) passes.

8. The apparatus as set forth in claim 7 **characterised in that** the friction element (7) has a further cylindrical wall which extends from the edge of the through opening in the annular bottom coaxially with respect to the cylindrical outside wall, wherein an end portion of the friction force spring (6) extends between the cylindrical outside wall and the further cylindrical wall and an end portion of the locking force spring (4) extends inside the further cylindrical wall.

9. The apparatus as set forth in one of the preceding claims **characterised in that** provided on the housing (1) are means for altering the length of the locking force spring (4) between the support point on the housing (1) and the locking element (5) for adjustment of the force of the locking force spring (4).

10. The apparatus as set forth in one of the preceding claims **characterised in that** provided on the housing (1) are means for altering the length of the friction force spring (6) between the support point on the housing (1) and the friction element (7) for adjustment of the force of the friction force spring (6).

11. A telescopic rail or linear guide comprising at least two rail elements (10, 11) which are supported displaceably relative to each other and an apparatus as set forth in one of the preceding claims for releasably locking the rail elements and for adjusting motivity to be applied for displacement, wherein recesses or bores (14) are provided on the second of the rail elements (10) which are supported displaceably relative to each other, which are adapted for an interlocking engagement with the locking element (5).

12. The telescopic rail or linear guide as set forth in claim 11 **characterised in that** the at least two rail elements (10, 11) are supported displaceably relative to each other by way of a ball bearing having a ball cage (12) and balls, wherein the ball cage has a through opening (16) which extends in the longitudinal direction and through which at least the friction element (7) and the locking element (5) pass relative to the second of the two rail elements (10) which are supported displaceably relative to each other.

13. The telescopic rail or linear guide as set forth in one of claims 11 or 12 **characterised in that** the friction element (7) is in biased rest by the force of the friction force spring (6) against the second of the rail elements (10) which are supported displaceably relative to each other.

## Revendications

1. Dispositif permettant l'enclenchement amovible de deux éléments de rail, logés pour être mobiles l'un par rapport à l'autre (10, 11), d'un rail télescopique ou d'un guide linéaire, et le réglage de la force de déplacement à exercer pour le procédé, comportant
un boîtier (1), qui peut être fixé au niveau d'un premier des éléments de rail logés pour être mobiles l'un par rapport à l'autre (11),
au moins un boulon de verrouillage (5) et au moins un ressort de force d'enclenchement (4), qui s'appuie sur le boîtier et peut précontraindre le boulon de verrouillage (5) en direction du deuxième des éléments de rail logés pour être mobiles l'un par rapport à l'autre (10),
au moins un élément de friction (7), et au moins un ressort de force de friction (6) qui s'appuie sur le boîtier et peut serrer en étant précontraint l'élément de friction (7) contre le deuxième des éléments de rail logés pour être mobiles l'un par rapport à l'autre (10),
dans lequel le boîtier (1) présente une paroi de boîtier (2) et un capot de boîtier (3), sur lequel s'appuient le ressort de force d'enclenchement (4), au moins au nombre de un, et le ressort de force de friction (6), au moins au nombre de un, dans lequel le ressort de force d'enclenchement (4), au moins au nombre de un, et le ressort de force de friction (6), au moins au nombre de un, sont réalisés sous la forme de ressorts hélicoïdaux ayant différents diamètres et sont agencés de manière coaxiale l'un à l'autre dans le sens de leur élasticité, et dans lequel est prévu, au niveau du boulon de verrouillage, un dispositif de traction qui permet de soulever le boulon de verrouillage de l'extérieur du boîtier du dispositif, de le sortir d'un évidement ou d'un alésage dans le deuxième des éléments de rail logés pour être mobiles l'un par rapport à l'autre et de libérer l'enclenchement.

2. Dispositif selon la revendication 1, **caractérisé en ce que** le boulon de verrouillage (5), au moins au nombre de un, est réalisé, au moins au niveau de sa section d'extrémité (5') dirigée en direction du deuxième des éléments de rail logés pour être mobiles l'un par rapport à l'autre (10), pour une mise en prise par correspondance de forme avec des évidements ou des alésages dans le deuxième des éléments de rail logés pour être mobiles l'un par rapport à l'autre (10).

3. Dispositif selon l'une des revendications précédentes, **caractérisé en ce que** le boulon de verrouillage (5), au moins au nombre de un, est réalisé de manière sensiblement cylindrique au moins au niveau de sa section d'extrémité (5') tournée en direction du deuxième des éléments de rail logés pour être mobiles l'un par rapport à l'autre (10).

4. Dispositif selon l'une des revendications précédentes, **caractérisé en ce que** le boîtier (1) présente une paroi de boîtier (2) cylindrique.

5. Dispositif selon la revendication 4, **caractérisé en ce que** le capot de boîtier (3) présente une ouverture de passage agencée au centre, par laquelle s'étend une section du boulon de verrouillage (5) ou par laquelle s'étend le dispositif de traction relié à l'intérieur du boîtier (1) au boulon de verrouillage (5), lequel est conçu pour déplacer le boulon de verrouillage (5) contre la précontrainte du boulon de verrouillage (5) par le ressort de force d'enclenchement (4), au moins au nombre de un, le dispositif de traction étant de préférence une tige de traction ou un câble Bowden.

6. Dispositif selon l'une des revendications précédentes, **caractérisé en ce que** le ressort de force d'enclenchement (4), au moins au nombre de un, et/ou le ressort de force de friction (6), au moins au nombre de un, sont réalisés sous la forme de ressorts de pression hélicoïdaux.

7. Dispositif selon l'une des revendications précédentes, **caractérisé en ce que** l'élément de friction (7) présente une paroi extérieure cylindrique et un fond annulaire s'étendant du bord de la paroi extérieure cylindrique vers l'intérieur, dans lequel une section d'extrémité du ressort de force de friction (6) s'étend à l'intérieur de la paroi extérieure cylindrique et s'appuie sur le fond annulaire pour comprimer précontraint l'élément de friction (7) contre le deuxième des éléments de rail logés pour être mobiles l'un par rapport à l'autre (10), et dans lequel le fond annulaire présente en outre une ouverture de passage, à travers laquelle passe le boulon de verrouillage (5).

8. Dispositif selon la revendication 7, **caractérisé en ce que** l'élément de friction (7) présente une autre paroi cylindrique, qui s'étend du bord de l'ouverture de passage dans le fond annulaire de manière coaxiale à la paroi extérieure cylindrique, dans lequel une section d'extrémité du ressort de force de friction (6) s'étend entre la paroi extérieure cylindrique et l'autre paroi cylindrique et une section d'extrémité du ressort de force d'enclenchement (4) s'étend à l'intérieur de l'autre paroi cylindrique.

9. Dispositif selon l'une des revendications précédentes, **caractérisé en ce que** des moyens sont prévus au niveau du boîtier (1) pour modifier la longueur du ressort de force d'enclenchement (4) entre le point d'appui sur le boîtier (1) et le boulon de verrouillage (5) pour un réglage de la force du ressort de force d'enclenchement (4).

10. Dispositif selon l'une des revendications précédentes, **caractérisé en ce que** des moyens sont prévus au niveau du boîtier (1) pour modifier la longueur du ressort de force de friction (6) entre le point d'appui sur le boîtier (1) et l'élément de friction (7) pour un réglage de la force du ressort de force de friction (6).

11. Rail télescopique ou guide linéaire comportant au moins deux éléments de rail logés pour être mobiles l'un par rapport à l'autre (10, 11) et un dispositif selon l'une quelconque des revendications précédentes pour verrouiller de façon amovible des éléments de rail et pour régler la force de déplacement à exercer pour le procédé, dans lequel sont prévus, au niveau du deuxième des éléments de rail logés pour être mobiles l'un par rapport à l'autre (10), des évidements ou alésages (14) qui sont conçus pour une mise en prise par correspondance de forme avec le boulon de verrouillage (5).

12. Rail télescopique ou guide linéaire selon la revendication 11, **caractérisé en ce que** les éléments de rail (10, 11), au moins au nombre de deux, sont logés pour être mobiles l'un par rapport à l'autre par le biais d'un roulement à billes comportant une cage à billes (12) et des billes, la cage à billes présentant une ouverture de passage (16) s'étendant dans le sens longitudinal, par laquelle au moins l'élément de friction (7) et le boulon de verrouillage (5) passent vers le deuxième des éléments de rail logés pour être mobiles l'un par rapport à l'autre (10).

13. Rail télescopique ou guide linéaire selon l'une des revendications 11 ou 12, **caractérisé en ce que** l'élément de friction (7) s'appuie précontraint de manière élastique par la force du ressort de force de friction (6) sur le deuxième des éléments de rail logés pour être mobiles l'un par rapport à l'autre (10).
